(19) Europäisches Patentamt
European Patent Office
Office européen des brevets

(11) Veröffentlichungsnummer: **0 437 693 A2**

# (12) EUROPÄISCHE PATENTANMELDUNG

(21) Anmeldenummer: **90121166.4**

(22) Anmeldetag: **06.11.90**

(51) Int. Cl.5: **C08L 77/00**, //(C08L77/00, 51:06),(C08L77/00,25:08)

Die Bezeichnung der Erfindung wurde geändert (Richtlinien für die Prüfung im EPA, A-III, 7.3).

(30) Priorität: **18.11.89 DE 3938421**

(43) Veröffentlichungstag der Anmeldung: **24.07.91 Patentblatt 91/30**

(84) Benannte Vertragsstaaten: **DE ES FR GB IT NL**

(71) Anmelder: **BAYER AG**

**W-5090 Leverkusen 1 Bayerwerk(DE)**

(72) Erfinder: **Heger, Georg, Dr.**
**Uerdinger Strasse 260**
**W-4150 Krefeld(DE)**
Erfinder: **Piejko, Karl-Erwin, Dr.**
**Unterscheider Weg 7a**
**W-5060 Bergisch Gladbach(DE)**
Erfinder: **Lindner, Christian, Dr.**
**Im Wasserblech 11**
**W-5000 Köln 80(DE)**
Erfinder: **Fengler, Gerd Dr.**
**Deutschordenweg 12**
**W-4150 Krefeld-Traar(DE)**
Erfinder: **Buekers, Josef**
**Kneinstrasse 58A**
**W-4150 Krefeld(DE)**

## (54) Formmassen aus Polyamiden und tert.-Alkylester-haltigen Pfropfpolymerisaten.

(57) Die Erfindung betrifft neue thermoplastische Formmassen aus Polyamiden unter Verwendung von Pfropfpolymerisaten, die nach einer bestimmten Verfahrensweise der Redoxpolymerisation hergestellt wurden und in der Hülle tert.-Butylacrylat enthalten.

EP 0 437 693 A2

Xerox Copy Centre

## FORMMASSEN AUS POLYAMIDEN UND SPEZIELLEN TERT.-ALKYLESTER-HALTIGEN PFROPFPOLYMERISATEN

Die Erfindung betrifft neue thermoplastische Formmassen aus Polyamiden unter Verwendung von Pfropfpolymerisaten, die nach einer bestimmten Verfahrensweise der Redoxpolymerisation hergestellt wurden und in der Hülle tert.-Butylacrylat enthalten.

Aus der DE-AS 1 669 702 sind Polyamid-Formmassen mit 1 bis 40 Gew.-% Copolymerisaten aus Olefinen und (Meth)acrylsäureestern eines tertiären Alkohols bekannt; sie weisen verbesserte Schlagzähigkeiten auf. Das Zähigkeitsniveau ist jedoch für viele Anwendungen unzureichend.

DE-AS 2 941 025 lehrt, das sich die Zähigkeit von Polyamiden insbesondere durch Mischung mit Pfropfkautschuken auf Basis Polybutadien, die eine Hülle aus Acrylsäureestern primärer und sekundärer Alkohole und zusätzlich (Meth)acrylsäure-tert.-butylester enthalten, erheblich verbessern läßt. J 62/149 749 beschreibt Polyamid-Blends aus Polystyrol, anorganischem Füllstoff und einem Pfropfpolymerisat aus Styrol/Elastomercopolymer, gepfropft mit Säureanhydriden, -amiden, -imiden, -estern, Epoxy- oder Hydroxylgruppen.

Aus J 63/308071 geht hervor, das Mischungen aus Polyamid und einem Copolymerisat aus aromatischen Vinylmonomer, Vinylcyanid, ethylenisch ungesättigten Carbonsäureestern, Maleinimiden und tert.-Butylmethacrylat gute Schlagzähigkeiten und Widerstandsfähigkeit gegen Laminarbrüche aufweisen.

Die Lehre der DE-OS 3 709 599 besagt, das Blends aus Polyamid, Kautschuk und Harzpolymer aus Vinylaromaten, Vinylcyaniden, (Meth)acrylaten und (Meth)acrylsäureestern eines tertiären Alkohols eine verringerte Wasseraufnahme zeigen und gute Zähigkeiten besitzen.

Die aus dem Stand der Technik bekannten Varianten besitzen vielfach kein ausgewogenes Eigenschaftsbild bezüglich Wärmeformbeständigkeit, Zähigkeit, Festigkeit (insbesondere Fließnahtfestigkeit) und glatten störungsfreien Oberflächen.

Weiterhin ist nach DE 37 08 913 bekannt, das spezielle Pfropfpolymerisate, dargestellt mittels bestimmter Initiatoren, vorteilhafte Eigenschaftskombinationen mit speziellen Vinylmonomerpolymerisaten aufweisen.

Es wurde nun gefunden, das sich Polyamidformmassen mit besonders günstigen Eigenschaftsmerkmalen dann erhalten lassen, wenn man Pfropfpolymerisate, aufgebaut aus speziellen Kautschuken und Pfropfpolymerisaten, zur Blendherstellung verwendet, welche mit Hilfe eines bestimmten Redoxkatalysators pfropfpolymerisiert wurden.

Gegenstand der Erfindung sind somit thermoplastische Formmassen, enthaltend

A) 35 bis 97 Gew.-%, insbesondere 45 bis 85 Gew.-% eines thermoplastischen Polyamids A)

B) 3 bis 65 Gew.-%, insbesondere 15 bis 55 Gew.-% eines Pfropfpolymerisates B) mit Pfropfhüllen B1) aus

B 1.1) wenigstens einem Monomer aus der Reihe der Styrole, a-Methylstyrole, Acrylnitril, Methacrylnitril, der Vinyl-$C_1$-$C_4$-Carbonsäuren, Ester der (Methy)acrylsäure mit primären oder sekundären $C_1$-$C_{10}$-Alkoholen, wobei Styrole oder $\alpha$-Methylstyrole in Kombination mit Acrylnitril bevorzugt sind und

B 1.2) wenigstens einem Ester der (Meth)acrylsäure mit tert. $C_4$-$C_{10}$-Alkoholen in Mengen bis zu 15 Gew.-% in der Pfropfhülle B 1)

gepfropft auf eine teilchenförmige Kauschukgrundlage B 2),

wobei das Pfropfpolymerisat B) hergestellt wurde, indem die Monomeren B 1) in wäßriger Emulsion in Gegenwart einer Emulsion des Kautschuks B 2) bei Temperaturen von 40 °C bis 70 °C unter Einsatz eines Initiatorsystems aus organischem Hydroperoxid (I) und Ascorbinsäure (II) pfropfpolymerisiert werden, wobei 0,3 bis 1,5 Gew.-Teile (I) und 0,1 bis 1 Gewichtsteil (II), jeweils bezogen auf 100 Gew.-Teile Monomer B 1) eingesetzt werden und das Gewichtsverhältnis (I)/(II) 0,3 bis 15, insbesondere 1 bis 10, vorzugsweise 3 bis 8, ist.

Die erfindungsgemäßen Formmassen können zusätzlich bis zu 45 Gew.-%, vorzugsweise 5-35 Gew.-%, insbesondere 5-25 Gew.-% (bezogen auf A + B + C) eines oder mehrerer weiterer Kautschukpolymerisate C) enthalten, wobei die Kautschukpolymerisate C) Kautschukgehalte größer/gleich Gew.-% besitzen sollen.

Als weitere Komponenten können die Formmassen ein Harzpolymer D) in Anteilen bis 25 Gew.-%, vorzugsweise bis 20 Gew.-%, bezogen auf die Summe der Komponenten (A + B + C + D), oder mehrere Harzpolymere D), E) enthalten.

Weiterhin können den thermoplastischen Formmassen (A-E) übliche Mengen an sonstigen Zusatz-, Verstärkungs- oder Hilfsstoffen zugesetzt sein.

Verfahren zur Herstellung von thermoplastischen Formmassen durch thermoplastisches Vermischen in

der Polyamidschmelze von

A) 35 - 97 Gew.-% eines thermoplastischen Polyamids A)

B) 3 - 65 Gew.-% eines Pfropfpolymerisates B) mit Pfropfhüllen B 1) aus

B1.1) wenigstens einem Monomer aus der Reihe der Styrole, α-Methylstyrole, Acrylnitril, Methacrylnitril, der Vinyl-$C_1$-$C_4$-Carbonsäuren, Ester der (Meth)acrylsäure mit primären oder sekundären $C_1$-$C_{10}$-Alkoholen, wobei Styrole oder α-Methylstyrole in Kombination mit Acrylnitril bevorzugt sind

und

B 1.2) wenigstens einem Ester der (Meth)acrylsäure mit tert. $C_4$-$C_{10}$-Alkoholen in Mengen bis zu Gew.-% in der Pfropfhülle B 1)

gepfropft auf eine teilchenförmige Kautschukgrundlage B 2),

und gegebenenfalls zusätzlich

C) 0 - 45 Gew.-%, eines oder mehrere Kautschukpolymerisate als Schlagzähmodifikatoren mit einem Kautschukgehalt ≧ 55 Gew.-%, wobei der Kautschukanteil der Komponente C) mindestens 10 Gew.-% höher als der Kautschukanteil der Komponente B) liegt,

und gegebenenfalls

D), E) 0 bis 25 Gew.-% eines oder mehrerer Harz-(Co)-Polymerisate,

F) übliche Zusatzstoffe zu thermoplastischen Formmassen in üblichen Mengen,

dadurch gekennzeichnet, das das Pfropfpolymerisat B) hergestellt wurde, indem die Monomeren B 1) in wäßriger Emulsion in Gegenwart einer Emulsion des Kautschuks B 2) bei Temperaturen von 40 °C bis 70 °C unter Einsatz eines Initiatorsystems aus organischem Hydroperoxid (I) und Ascorbinsäure (II) pfropfpolymerisiert werden, wobei 0,3 bis 1,5 Gew.-Teile (I) und 0,1 bis 1 Gewichtsteil (II), jeweils bezogen auf 100 Gew.-Teile Monomer B 1) eingesetzt werden und das Gewichtsverhältnis (I)/(II) 0,3 bis 15 ist.

Verfahren zur Herstellung von thermoplastischen Formmassen nach Anspruch 3 durch thermoplastisches Vermischen in der Polyamidschmelze von

A) unter 70 Gew.-% in der Mischung (aus A + B + C + D + E) Polyamiden mit einer relativen Viskosität von 2,0 bis 5,0,

mit

B) + C) in einem Gesamtkautschukgehalt von 10 bis Gew.-%, bevorzugt 12 bis 20 Gew.-%,

wobei die Differenz zu 100 Gew.-% aus den Nichtkautschukanteilen der Komponenten B), sowie gegebenenfalls C), D) und E), besteht,

und wobei der Pfropfpolymerisat B) nach dem Verfahren nach Anspruch 3 hergestellt wird,

sowie gegebenenfalls zusätzlich

F übliche Mengen an Zusatzstoffen.

Als Polyamid-Komponente A) der erfindungsgemäsen Formmassen eignen sich alle teilkristallinen Polyamide, insbesondere Polyamid-6, Polyamid-6,6, Polyamid-4,6, Mischungen der Polyamide und teilkristalline Copolyamide auf Basis dieser Komponenten. Weiterhin kommen teilkristalline Polyamide in Betracht, deren Säurekomponente insbesondere ganz oder teilweise (neben Adipinsäure bzw. ε-Caprolactam) aus Terephthalsäure und/oder Isophthalsäure und/oder Korksäure und/oder Sebacinsäure und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Tetramethylendiamin und/oder Hexamethylendiamin und/oder 2,2,4- und/oder 2,4,4-Trimethylhexamethylendiamin und/oder Isophorondiamin besteht, und deren Zusammensetzungen grundsätzlich im Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der obengenannten Ausgangskomponenten, hergestellt werden.

Besonders bevorzugte teilkristalline Polyamide A) sind Polyamid-6 und Polyamid-6,6, ihre Mischungen oder Copolyamide mit nur geringen Anteilen (bis etwa 10 Gew.-%) der Co-Komponenten.

Es können als Polyamidkomponenten A) auch amorphe Polyamide eingesetzt werden. Sie werden erhalten durch und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere erhalten werden, geeignet, ferner solche Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbonan; oder aus Isophthalsäure, 4,4'-Diamino-dicyclohexylmethan und ε-Caprolactam; oder aus Isophthalsäure 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diamino-dicyclohexylmethans können auch Gemische der stellungsisomeren Diaminodicyclohexylmethane eingesetzt werden, die sich üblicherweise zusammensetzen aus:
70 bis 99 Mol-% des 4,4'-Diaminoisomeren
1 bis 30 Mol-% des 2,4'-Diaminoisomeren
0 bis 2 Mol -% des 2,2' -Diaminoisomeren
und gegebenenfalls entsprechend höherkondensierten Diaminen, die durch Hydrierung von Diaminophenylmethan technischer Qualität erhalten werden.

Pfropfpolymerisate B im Sinne der Erfindung sind Pfropfpolymerisate mit Pfropfhüllen B 1) aus

B 1.1) wenigstens einem Monomer aus der Reihe der Styrole, der α-Methylstyrole, Acrynitril, Methacrylnitril, der Vinyl-$C_1$-$C_4$-Carbonsäuren, Ester der (Meth)acrylsäure mit primären und sekundären $C_1$-$C_{10}$-Alkoholen, wobei Styrole oder α-Methylstyrole in Kombination mit Acrylnitril bevorzugt sind,

und

B 1.2) wenigstens einem Ester der (Meth)acrylsäure mit tert.-$C_4$-$C_{10}$-Alkoholen, in Mengen bis zu 15 Gew.-% in der Pfropfhülle B 1),

gepfropft auf eine teilchenförmige Kautschukgrundlage B 2) mit Glastemperaturen < 0 °C, insbesondere < -20 °C, wobei die Pfropfpolymerisate B) Kautschukanteile von 5 bis 60 Gew.-%, bevorzugt 10 bis 50 Gew.-%, insbesondere 15 bis 34 Gew.-% aufweisen, wobei das Pfropfpolymerisat B) dadurch hergestellt wurde, das man die Monomeren B 1) in wäßriger Emulsion im Temperaturbereich von 40 °C bis 70 °C unter Einsatz eines Initiatorsystems aus organischem Hydroperoxid (I) und Ascorbinsäure (II) pfropfpolymerisiert, wobei 0,3 bis 1,5 Gew.-Teile (I) und 0,1-1 Gew.-Teile (II), jeweils bezogen auf 100 Gew.-Teile der Monomeren B 1) eingesetzt werden, wobei das jeweilige Verhältnis (I)/(II) 0,3 bis 15 beträgt.

Bevorzugte Monomere B 1.1) als Monomerbausteine der Pfropfhülle B 1) sind Styrol, α-Methylstyrol einerseits und als weitere Monomere Acrylnitril, Methylmethacrylat, n-Butylacrylat, Cyclohexylmethacrylat und Vinylacetat; besonders bevorzugt sind Styrol, α-Methylstyrol und Acrylnitril. Die Styrole und α-Methylstyrole können dabei am aromatischen Ring alkyl-, halogenalkyl-oder halogensubstituiert sein, z.B. durch $C_1$-$C_3$-Alkyl-, halogenhaltige ($C_1$-$C_3$)-Alkyl- und/oder Halogengruppen, bevorzugt jedoch sind Styrol und α-Methylstyrol.

Monomere B 1.2) im Sinne der Erfindung sind tertiäre (Meth)acrylsäureester und besitzen die allgemeine Formel

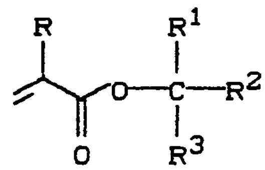

mit R = H, $CH_3$ und
$R_1$, $R_2$, $R_3$ = Alkyl, so daß die Summe der C-Atome in $R_1$, $R_2$ und $R_3$ 3 - 9 beträgt.

Besonders bevorzugte Monomere B 1.2) sind tert.-Butylacrylat, tert.-Butylmethacrylat, tert.-Pentylmethacrylat und tert.-Hexylacrylat, sowie gegebenenfalls tert. Octyl (meth)acrylat.

Die Pfropfhülle B 1) enthält bis zu 15 Gew.-%, bevorzugt 1-12 Gew.-%, insbesondere 3-10 Gew.-% der Monomere B 1.2).

Die teilchenförmige Kautschukgrundlage B 2) ist ein radikalisch hergestelltes Emulsionspolymerisat aus wenigstens teilvernetzten Dien- oder Alkylacrylatkautschuken mit mittleren Teilchendurchmessern ($d_{50}$-Wert) von 80 bis 600 nm, bevorzugt 100 bis 400 nm.

Dienkautschuke sind z.B. Polybutadien, Polyisopren und Copolymerisate von Butadien mit bis zu 35 Gew.-% Comonomeren wie Styrol, Acrylnitril, Methylmethacrylat, $C_1$-$C_6$-Alkylacrylat. Acrylatkautschuke sind z.B. vernetzte teilchenförmige Emulsionspolymerisate aus $C_1$-$C_6$-Alkylacrylaten, insbesondere $C_2$-$C_6$-Alkylacrylaten, gegebenenfalls in Mischung mit bis zu 15 Gew.-% Comonomeren wie Styrol, Methylmethacrylat, Butadien, Vinylmethylether, Acrylnitril und wenigstens einem polyfunktionellen vernetzenden Comonomer, z.B. Divinylbenzol, Glykol-bisacrylate, Bisacrylamide, Phosphorsäuretriallylester,Allylester der (Meth)-

acrylsäure, Triallylisocyanurat, wobei die Acrylatkautschuke bis zu 4 Gew.-% der vernetzenden Comonomere enthalten können. Solche Kautschukgrundlagen sind bekannt. Besonders geeignete Acrylat-Kautschukgrundlagen besitzen eine Kern-Mantel-Struktur mit einem Polybutadienkautschukkern, insbesondere mit einem Kernanteil von 0,5 bis 10, vorzugsweise 2 bis 4 Gew.-%.

Die Kautschukgrundlage B 2) besitzt Gelgehalte (als Maß für die Vernetzung) von größer 60 Gew.-%, vorzugsweise > 75 Gew.-%. Die Gelgehalte werden nach M. Hoffmann et. al., Polymeranalytik I und II, Georg Thieme-Verlag, Stuttgart (1977) bestimmt.

Die erfindungsgemäß einzusetzenden Pfropfpolymerisate können in wäßriger Emulsion durch Polymerisation der Monomere auf einen in wäsriger Emulsion vorliegenden Kautschuk hergestellt werden. Dabei werden üblicherweise oberflächenaktive Hilfsmittel eingesetzt, Emulgatoren oder Dispergatoren sowie gegebenenfalls Zusätze, um bestimmte pH-Werte und Elektrolytgehalte bei der Pfropfpolymerisation einzustellen. Unter Umständen kann man die Emulsions-Pfropfpolymerisation auch ohne Emulgatorzusatz durchführen, insbesondere dann, wenn man mit geringen Monomermengen arbeitet, bezogen auf die Kautschukmenge, oder wenn die in der Kautschukemulsion (Latex) schon selbst vorliegenden Mengen an Emulgator bereits ausreichen, um die Pfropfpolymerisation der Monomere im Emulsionszustand bei genügender Emulsionsstabilität zu gewährleisten.

Besonders geeignet sind anionische Emulgatoren, vorzugsweise Alkali-Salze von Fettsäuren, Harzsäuren, disproportionierten Harzsäuren, Alkylsulfonsäuren, Arylsulfonsäuren. Sie werden in Mengen bis zu 5 Gew.-%, vorzugsweise bis zu 2,5 Gew.-%, bezogen auf die zu polymerisierenden Monomere, eingesetzt.

Geeignete Hydroperoxide sind beispielsweise Cumolhydroperoxid, tert.-Butylhydroperoxid, Wasserstoffperoxid, vorzugsweise Cumolhydroperoxid und tert.-Butylhydroperoxid, also Hydroperoxide mit großen Halbwertszeiten.

Das Verfahren kann beispielsweise wie folgt durchgeführt werden:

Eine wäßrige Emulsion eines partiell vernetzten Dienkautschuks wird diskontinuierlich oder kontinuierlich in wäsriger Emulsion bepfropft; bei Polymerisationstemperaturen von 40 °C bis 70 °C, insbesondere von 50 °C bis 70 °C, wird die Kautschukemulsion mit den Pfropfmonomeren sowie gegebenenfalls zusätzlichem Emulgator und Hydroperoxid sowie Ascorbinsäurelösungen versetzt. Dabei sind die Mengenverhältnisse, wie oben beschrieben, einzuhalten. In Ausnahmefällen können in die Polymerisation als weitere Komponente des Startersystems kata lytisch geringe Mengen Schwermetallkationen, insbesondere Fe, zugefügt werden, insbesondere dann, wenn Dienkautschukemulsionen verwendet werden müssen, die selbst schon größere Mengen Komplexierungsagenzien enthalten. Normalerweise wird in dem erfindungsgemäßen Verfahren ohne Zusatz von Eisenionen gearbeitet; diese Methode ist bevorzugt und erlaubt technisch vorteilhaft die Gewinnung praktisch schwermetallfreier- bzw. -armer Pfropfpolymerisate, da sich bekanntermasen derartige Metallspuren nachteilig auf anwendungstechnische Eigenschaften von Kunststoffen auswirken können, Das Verfahren arbeitet mit wäsrigen Lösungen von Ascorbinsäure und wäßrigen Lösungen von Hydroperoxiden; vorteilhaft ist es, nicht genügend wasserlösliche Hydroperoxide, wie Cumolhydroperoxid, in Form einer wäßrigen Emulsion in das Polymerisationssystem einzuspeisen. In solchen Emulsionen wird vorteilhaft der gleiche Emulgator eingesetzt wie in der Pfropfpolymerisation.

Das Hydroperoxid und die Ascorbinsäure können portionsweise oder kontinuierlich in die Pfropfpolymerisation eindosiert werden. In einer bevorzugten Variante wird das Hydroperoxid anteilmäßig mit dem zu bepfropfenden Kautschuk in den Reaktoren vorgelegt; die Pfropfmonomeren sowie die restliche Ascorbinsäure, Hydroperoxid und gegebenenfalls Emulgator werden mit fortschreitender Polymerisation der Pfropfmonomeren separat in den Reaktor eingespeist.

Die Mengen Hydroperoxid und Ascorbinsäure sind kritisch. Bei Überdosierung von Hydroperoxid und/oder Ascorbinsäure wird die Pfropfpolymerisation beeinträchtigt. Die Pfropfausbeute geht zurück; das Molekulargewicht der gepfropften und des freien Harzes wird geringer; Unter-oder Überschreitung der Mengen an Hydroperoxid und Ascorbinsäure kann sich auserdem empfindlich auf Monomerumsatz und Emulsionsstabilität auswirken, so daß die technische Realisierung der Pfropfpolymerisation unmöglich wird. Um die Durchführung des Verfahrens, die Struktur der Pfropfpolymerisate und deren physikalische Eigenschaften zu optimieren, sind bei der Pfropfpolymerisation eine Temperatur von 40 °C bis 70 °C und die oben angegebenen Hydroperoxid/Ascorbinsäuremengen unbedingt einzuhalten.

Bei der Pfropfpolymerisation bis zu Monomerumsätzen von größer 90 Gew.-%, insbesondere größer 98 Gew.-%, fallen lagerstabile Pfropfpolymeremulsionen mit Polymerisatge-halten von 25 bis 50 Gew.-% an; das Pfropfpolymerisat selbst läßt sich gut aus den Emulsionen durch bekannte Koagulations-Verfahren (z.B. mittels Säuren oder Salzen) isolieren. Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

Gegebenenfalls als weitere Komponente können die erfindungsgemäsen Formmassen als Komponente

C) ein die Schlagzähigkeit der Formmassen weiter erhöhendes Kautschukpolymerisat enthalten.

Bevorzugte Formmassen enthalten bis zu 45, vorzugsweise 5-35, insbesondere 5 bis 25 Gew.-% der Komponente C), bezogen auf die Summe A) + B) + C). Die Komponente C) stellt ein Kautschukpolymerisat dar und enthält oder ist ein Kautschukpolymerisat mit Einfriertemperaturen (Glastemperaturen) kleiner 0 °C, insbesondere kleiner -20 °C. Es kann aus der Reihe der Homo-, Co- oder Pfropfpolymerisate auf der Basis von Dienmonomer-, Olefin- oder Acrylatkautschuken ausgewählt werden, die unvernetzt, insbesondere teilvernetzt oder hochvernetzt sein können. Die Komponente C) ist aus den an sich bekannten Kautschukpolymerisaten auszuwählen, die zur Verbesserung der Eigenschaften, insbesondere zur Schlagzähverbesserung von thermoplastischen Polyamiden üblicherweise verwendet werden. Der Kautschukgehalt der Komponenten C) soll ≧55 Gew.-%, insbesondere ≧70 Gew.-% betragen; dies gilt vor allem für Komponenten C) aus der Reihe der Pfropfpolymerisate.

Typische Vertreter der Komponente C) sind z.B. Olefinkautschuke, beispielsweise Dienkautschuke sowie auch Ethylen-Propylen-Copolymerisate, die gegebenenfalls noch geringe Mengen unkonjugierter Dienmonomere eingebaut enthalten können (sogenannte EPDM-Kautschuke), sowie vor allem Dienmonomer/Acrylnitril/Copolymerkautschuke, Dienpolymer/Vinylarylpolymer-Blockcopolymere wie Styrol/Butadien-Blockcopolymere.

Weiterhin geeignete Komponenten C) können Olefinkautschuke mit sauren Gruppen sein. Vorteilhaft kann be sonders jedoch der Einsatz von Carboxylgruppen enthaltenden Terpolymerisaten aus Ethylen, (Meth)acrylsäure sowie Butylacrylat sein, oder aus Ethylen/Propylen-Copolymerisaten oder aus Ethylen/Propylen/Butadien-Copolymerisaten bestehen, die mit Maleinsäureanhydrid gepfropft sind.

Erfindungsgemäß als Komponente C) geeignet können auch kautschukartige Copolymerisate aus Ethylen-Vinylacetat-und Ethylen-(Meth)acrylsäurealkylester-Copolymeren sein. Geeignet als Komponente C) sind auch die in der GB PS 1 284 489 beschriebenen Ethylencopolymere mit Aminoacrylatmonomeren. Weiterhin lassen sich auch Copolymere aus Olefinen, Acrylaten und säurefunktionellen Monomeren wie z.B. (Meth)acrylsäure oder Maleinsäureanhydrid verwenden.

Besonders geeignete Komponenten C) im Sinne der Erfindung sind kautschukartige Pfropfpolymerisate, beispielsweise Pfropfpolymerisate aus α-Olefin-Polymerisaten und Carbonsäure- und/oder Ester-Pfropfmonomeren, wobei als Pfropfgrundlagen Copolymere oder Homopolymere aus Ethylen, Propylen und Buten-(1) geeignet sind,

Geeignete Pfropfpolymerisate sind auch die aus den Patentanmeldungen DE-A 2 622 876, EP-A 13 941, DE-A 2 622 973, DE-A 2 401 149 und EP-A 9757 bekannten Poly-α-olefinkautschuk-Maleinsäureanhydrid-Addukte, die gemäs DE-A 3 335 706 bekannten Umsetzungsprodukte aus Ethylen-Copolymeren mit Maleinsäureanhydrid und Dialkylestern der Malein- bzw. Fumarsäure, die gemäs FR-PS 1 568 637 mit ungesättigten Säuren gepfropften Polyolefinkautschuke (GB-PS 998 439), sowie die z. B. in der DE-A 2 622 973 beschriebenen Maleinsäure-gepfropften EPDM-Kautschuke.

Vorteilhaft geeignet sind insbesondere Pfropfpolymerisate, die durch Aufpfropfen von Styrolmonomeren und Acrylnitril auf ein Kautschukpolymerisat, dessen Glastemperatur unter 0 °C, vorzugsweise unter -20 °C, liegt, entstehen; Kautschukpolymerisate sind dann beispielsweise Polybutadien, Butadien-Acrylester-Copolymere z. B. auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Die Herstellung derartiger kautschukmodifizierter Copolymerisate ist bekannt (z. B. aus JA 48 850 oder US-PS 4 217 424.

Als Komponente C) sind auch die gemäß DE-A 2 906 222 bekannten Pfropfpolymerisate aus Styrol und Acrylnitril auf Polybutadien oder Copolymerisaten aus Butadien und α,β-ungesättigten Monomeren, wie beispielsweise Styrol, Acrylnitril, niedere Alkylester oder Acryl- oder Methacrylsäure, sowie die bekannten bepfropften Acrylatkautschuke geeignet.

Vorteilhaft geeignet sind auch die z. B. in der DE-A 3 200 070 beschriebenen mehrphasigen Polymere aus einem stark vernetzten Dienkautschuk als Kern, mit einer ersten Hülle aus vernetztem Acrylatkautschuk (Kautschuk mit Kern/Mantelstruktur) und einer zweiten Hülle aus einem Polymerisat oder Copolymerisat aus harzbildenden Monomeren aus der Reihe Styrol, Acrylnitril, Methacrylnitril, Methacrylsäureester oder Mischungen daraus.

Geeignet sind auch die in EP-A 0 134 937 beschriebenen gepfropften, partiell vernetzten Dien- und/oder Acrylatkautschuke, sowie die gemäß DE-A 2 758 615 aus einem vernetzten Kautschuk als Pfropfgrundlage hergestellten Pfropfprodukte. Bevorzugt werden dabei Kautschuke auf Basis Polybutadien und/oder Polyisopren, die bis zu 40, vorzugsweise bis zu 10 Gew.-% Styrol und/oder Acrylnitril und/oder Ester der Acrylsäure als Comonomer enthalten können. Mögliche Pfropfmonomere können sein: Acrylnitril, Methacrylnitril, aliphatische Ester und Amide der Acrylsäure und Methacrylsäure mit bis zu 22 C-Atomen.

Besonders hochwertige erfindungsgemäße Formmassen erhält man, wenn als Komponente C) Pfropfpolymerisate mit teilchenförmiger Struktur und partieller Vernetzung verwendet werden. Vorteilhafte Teilchengrößen ($d_{50}$-Werte) liegen im Bereich von 0,05 bis 2 µm, besonders 0,08 bis 0,6 µm, insbesondere von 0,15 bis 0,5 µm. Die zur Herstellung solcher Pfropfpolymerisate eingesetzten Kautschuke sind ebenfalls teilchenförmig, wenigstens teilvernetzt und besitzen Gelgehalte (als Maß für den Vernetzungsgrad) von größer 30 Gew.-%, vorzugsweise größer 70 Gew.-%.

Solche Pfropfpolymerisate enthalten Kautschukgehalte im Bereich 55-85 Gew.-%, bevorzugt 70-80 Gew.-%, und enthalten Kautschuke aus der Reihe der Dienkautschuke (Butadien, Isopren) sowie deren Copolymere mit Styrol, Acrylnitril, Alkyl(meth)acrylat, Vinylether, oder der Alkylacrylatkautschuke ($C_1$-$C_8$-Alkyl-Acrylat) sowie deren Copolymere mit Dienmonomeren, Styrol, Acrylnitril, Alkylmethacrylat, Vinylester, Vinylether. Alkylacrylatkautschuke enthalten üblicherweise geringe Mengen polyfunktioneller Comonomere, die eine Vernetzung der Acrylatkautschuke bewirken, beispielsweise Divinylbenzol, Diol-bis-(Meth)-acrylate, Bis-Acrylamide, Acrylamid-Methylolderivate, Trivinylbenzol, Triallylcyanurat, Triallylisocyanurat. Solche Kautschukgrundlagen sind bekannt. Besonders geeignete Acrylat-Kautschukgrundlagen besitzen eine Kern-Mantel-Struktur, insbesondere einen Dienkautschukkern mit einem Kernanteil von 0,5 bis 10, vorzugsweise 2 bis 4 Gew.-%.

Die bevorzugt geeigneten, auf die Kautschukgrundlagen aufgepfropften Monomere sind Alkylmethacrylat, Styrol, Acrylnitril, Alkylacrylat, Acrylamide, insbesondere Methylmethacrylat sowie Kombinationen aus Methylmethacrylat und Alkylacrylaten oder Styrol in Kombination mit Acrylnitril.

Besonders gut geeignete, bevorzugt eingesetzte Pfropfpolymerisate vom Typ C) enthalten Kautschukgehalte ≧55 Gew.-%, enthalten Kautschuk mit Gelgehalten größer 70 Gew.-%, besitzen Teilchengrößen von 0,15 bis 0,5 µm, enthalten Polybutadienkautschuk oder Polybutylacrylatkautschuk sowie entsprechende Kern/Mantel-Kautschuke (nach DE-A 3 200 070) und besitzen als Pfropfmonomere Methylmethacrylat, insbesondere in Kombination mit n-Alkylacrylat, oder Styrol-Acrylnitrilmischungen mit Acrylnitrilgehalten zwischen 5-40 Gew.-%. Diese Pfropfpolymerisate lassen sich durchweg durch Emulsionspfropfpolymerisation nach bekannten Methoden herstellen.

Als weitere Komponente können die erfindungsgemäßen Formmassen gegebenenfalls harzartige Polymerisate bzw. Copolymerisate D), E) enthalten, aus Styrolen, α-Methylstyrolen, (Meth)acrylnitril, Estern der (Meth)acrylsäure, Vinyl-$C_1$-$C_4$-carbonsäuren bzw. Mischungen aus diesen Monomeren, mit Grenzviskositäten (Staudinger-Indices) [η] zwischen 0,3 und 1,5 dl/g (in Toluol bei 23 °C gemessen). Bevorzugt sind Copolymere aus Styrol oder α-Methylstyrol mit Acrylnitril, die gegebenenfalls bis zu 40 Gew.-% Ester der (Meth)Acrylsäure, insbesondere Methylmethacrylat oder n-Butylacrylat enthalten können. Die Styrolderivate sind dabei in Anteilen zwischen 100 und 10 Gew.-%, bevorzugt 90-20 Gew.-%, besonders bevorzugt 80-30 Gew.-% enthalten. Die Harzkomponenten D), E) enthalten keine tertiären Ester der (Meth)Acrylsäure und keine Comonomere mit reaktiven Gruppen wie Carboxyl-, Epoxid- oder Anhydrid-. Die Vinylpolymerisate D), E) werden nach üblichen Verfahren wie radikalische Polymerisation in Masse, Lösung, Suspension oder Emulsion, bevorzugt aber durch radikalische Emulsionspolymerisation in Wasser oder Massepolymerisation erhalten. Die Komponenten D), E) sind gegebenenfalls in den erfindungsgemäßen Formmassen in Anteilen bis zu 25 Gew.-% bezogen auf die Summe der Komponenten A + B + C + D (+ E) enthalten, bevorzugt in Anteilen kleiner 20 Gew.-%.

Die Aufarbeitung der als wäßrige Emulsion anfallenden Komponenten B, gegebenenfalls C und/oder gegebenenfalls D), E) zu einem Pulver,kann getrennt oder gemeinsam nach Vermischen der Latices durch Koagulation erfolgen. Bei diesem Verfahren wird bevorzugt der zu koagulierende Latex bzw. die Latexmischung auf pH-Werte zwischen 7 und 12, insbesondere 8-11 eingestellt, wenn die Latexmischung nicht bereits einen entsprechen pH-Wert besitzt. Die Koagulation erfolgt bevorzugt mit wäßrigen Salzlösungen, die pH-Werte ≧ 5, insbesondere ≧ 7 aufweisen.

Um ein ausgewogenes Eigenschaftsbild der erfindungsgemäßen Formmassen zu erhalten, müssen die Komponenten A), B) und gegebenenfalls C), D) in ihren Mengenanteilen und B), C) in ihrer Zusammensetzung (z.B. Kautschukgehalt) aufeinanderabgestimmt werden. Werden beispielsweise Eigenschaften wie geringe Wasseraufnahme bei hoher Zähigkeit und Fließnahtfestigkeit gefordert, so ist bevorzugt, das der Polyamidanteil A) unter 70 Gew.-% liegt bei einem Gesamtkautschukgehalt (Kautschukanteil der Komponenten B) und gegebenenfalls C), bezogen auf die gesamte Formmasse) von 10 bis 25 Gew.-%, insbesondere von 12 bis 20 Gew.-%. Die Differenz zu 100 % besteht dabei aus den Nichtkautschukanteilen der Komponenten B), gegebenenfalls C) bzw. aus den zusätzlich zugesetzten Harzkomponenten D), E). Aus dieser Betrachtung geht weiterhin hervor, das, wenn B) in kleinen Anteilen (zwischen 3 und 15 Gew.-%) in den erfindungsgemäßen Formmassen enthalten ist, die Komponente C) in solchen Mengen enthalten ist, das entsprechend den Kautschukanteilen von B) und C) der Gesamtkautschukgehalt in den angegebenen Grenzen liegt.

Die Polyamide A) sollen bevorzugt eine relative Viskosität (gemessen in einer 1 gew.-%igen Lösung in

m-Kresol bei 25 °C) von 2,0 bis 5,0, bevorzugt von 2,5 bis 4,0 aufweisen.

Auch übliche Additive F), wie Gleit- und Entformungsmittel, Nukleierungsmittel, Stabilisatoren, Füll-und Verstärkungsstoffe, Flammschutzmittel, Farbstoffe sowie Thermostabilisatoren, Antioxidantien und/oder Lichtschutzmittel können den erfindungsgemäßen Formmassen zugesetzt werden.

Die Herstellung der erfindungsgemäßen Formmassen kann durch Vermischen der Komponenten in üblichen Mischaggregaten, wie Walzen, Knetern, Ein- oder Mehrwellenextrudern, erfolgen, also auf den üblichen Verfahrenswegen der Thermoplastformmassenherstellung.

Die erfindungsgemäßen Formmassen enthaltenden, speziell hergestellten Pfropfpolymerisate B) zeichnen sich durch Vorteile in der Eigenschaftskombination hoher Glanz der Oberflächen, Dimensionsstabilität und guter Verarbeitbarkeit aus, im Vergleich zu entsprechenden Formmassen, die nicht im Sinne der Erfindung erhalten werden, beispielsweise durch Pfropfpolymerisation mit anorganischen Persulfaten oder Azoverbindungen in Abwesenheit dotierter Mengen Reduktionsmittel. Im Vergleich zu anderen Reduktionsmitteln führt Ascorbinsäure zu Formmassen im Sinne der Erfindung mit Vorteilen im Hinblick auf Verarbeitungsbreite bei hohen Temperaturen und Rohton.

## Beispiele

Verwendete Komponenten:

A) Polyamid 6 mit einer relativen Viskosität von 3,0 (gemessen an einer 1 Gew.-% Lösung in m-Kresol bei 25 °C)

B) tert.-butylacrylathaltige Pfropfpolymerisate

B1) Eine Mischung aus 1.653 Gew.-Teilen eines teilvernetzten Polybutadienlatex mit einem Feststoffgehalt von 49 Gew.-% einem mittleren Teilchendurchmesser ($d_{50}$-Wert) von 380 nm und einem Gelgehalt des Polymerisats von 93 Gew.-% und 1.653 Gew.-Teilen Wasser wird in einem Reaktor vorgelegt und unter Durchleiten von Stickstoff auf 61 °C aufgeheizt. Bei dieser Temperatur werden folgende zwei Lösungen bzw. Emulsionen in nachfolgender Reihenfolge in den Reaktor eingegeben:

a) 1,40 Gew.-Teile Cumolhydroperoxid
200 Gew.-Teile Wasser

b) 0,80 Gew.-Teile Ascorbinsäure
200 Gew.-Teile Wasser

Danach werden die folgenden Mischungen innerhalb von 6 Stunden bei einer Innentemperatur von 61 °C in den Reaktor unter Rühren eindosiert:

Z1) 900 Gew.-Teile Wasser
60 Gew.-Teile Na-Salz disproportionierter Abietinsäure
45 Gew.-Teile 1n-Natronlauge
14 Gew.-Teile Cumolhydroperoxid

Z2) 1.313 Gew.-Teile Styrol
511 Gew.-Teile Acrylnitril
66,2 Gew.-Teile tert.-Butylacrylat

Z3) 1.000 Gew.-Teile Wasser
2 Gew.-Teile Ascorbinsäure

Anschließend wird bei 61 °C 6 Stunden lang auspolymerisiert. Es wird ein Latex mit einem Feststoffgehalt von 34 % erhalten. Nach Stabilisierung mit 1,2 Gew.-Teilen phenolischem Antioxidans pro 100 Gew.-Teilen Propfpolymer wird das Pfropfpolymer mit einer wäßrigen Magnesiumsulfat-Lösung ausgefällt, gewaschen und zu einem Pulver getrocknet.

B2-B3) Man verfährt wie bei B1). Als Zulauf Z2 werden folgende Mischungen eingesetzt:

B2) 1.334 Gew.-Teile Styrol
519 Gew.-Teile Acrylnitril
37,8 Gew.-Teile tert.-Butylacrylat

B3) 1.279 Gew.-Teile Styrol
497,5 Gew.-Teile Acrylnitril
113,4 Gew.-Teile tert.-Butylacrylat

B4) Man verfährt wie bei B1): Es wird eine Mischung aus 1.102 Gew.-Teilen des Polybutadienlatex und 1.774 Gew.-% Wasser vorgelegt. Als Zuläufe Z1-Z3 werden folgende Mischungen eingesetzt:

Z1) 1.200 Gew.-Teile Wasser
60 Gew.-Teile Na-Salz disproportionierter Abietinsäure
45 Gew.-Teile 1n-Natronlauge
14 Gew.-Teile Cumolhydroperoxid

Z2) 1.501 Gew.-Teile Styrol
584 Gew.-Teile Acrylnitril
75,6 Gew.-Teile tert.-Butylacrylat
Z3) 1.200 Gew.-Teile Wasser
2 Gew.-Teile Ascorbinsäure

C) Kautschukpolymerisate

C1) Pfropfpolymerisat aus einer vernetzten Polybutadienkautschukgrundlage einer mittleren Teilchengröße ($d_{50}$) von 380 nm und einer Pfropfhüller aus Styrol-Acrylnitril im Gewichtsverhältnis 72/28 und einem Kautschukgehalt von 55 Gew.-%.

C2) Pfropfpolymerisat wie C1) mit einem Kautschukgehalt von 30 Gew.-%.

D) Thermoplastisches Harzpolymer Styrol-Acrylnitril-Harz mit einem 28 Gew.-% Acrylnitril und einem Massemittelwert der Molmasse von 110.000 g/mol hergestellt durch kontinuierliche Massepolymerisation.

E) Thermoplastisches Harzpolymer mit tert.-Butylacrylat
Terpolymer aus Styrol-Acrylnitril-tert.-Butylacrylat (67,7/26,3/3/6 Gew.-%) mit einem Massemittelwert der Molmasse von 90.000 g/mol, hergestellt durch radikalische Emulsionspolymerisation in Wasser.

Herstellung und Prüfung der Formmassen

Auf einem kontinuierlich arbeitenden Doppelwellenextruder wurde das Polyamid A) aufgeschmolzen und zu der Schmelze die Komponente B) gegebenenfalls C), D) und E) zudosiert und in der Schmelze homogenisiert. Die Zylindertemperaturen wurden so gewählt, das Massetemperaturen von 260 bis 290 °C eingehalten wurden. Der Schmelzestrang wird vor Austritt aus der Düse entgast in Wasser abgeleitet, granuliert und getrocknet.

Von den Formmassen wurden auf einer üblichen Spritzgußmaschine 80 mm x 10 mm x 4 mm Prüfstäbe sowie Normkleinstäbe 50 mm x 6 mm x 4 mm hergestellt. Geprüft wurden am 80 mm x 10 mm x 4 mm Prüfstab der Biege-E-Modul (DIN 53 457), die Schlagzähigkeit bzw. Kerbschlagzähigkeit nach Izod (ISO 180) bei verschiedenen Temperaturen. Die Fliesnahtfestigkeit wurde durch Schlagbiegeversuch nach Charpy (ISO 179) bei Raumtemperatur am Normkleinstab ermittelt.

Die Wasseraufnahme wird nach zweiunddreisigstündiger Lagerung im Tropenklima (40 °C, 95 % relative Luftfeuchte) gravimetrisch ermittelt.

Die Zusammensetzung der Formmassen sind in Tabelle 1 angegeben, die Prüfergebnisse in Tabelle 2.

Die erfindungsgemäßen Formmassen zeichnen sich durch hohe (Kerb-)Schlagzähigkeiten, Zusammenfließnahtfestigkeit und hohe E-Moduln bei erhöhter Temperatur (80 °C) und hochglänzende Oberflächen aus.

Entsprechend dem Eigenschaftsbild eignen sich die erfindungsgemäßen Formmassen überall in Spritzguß- und Extrusionssektor, wo die beschriebenen Eigenschaften gefordert werden (z.B. KFz-Bereich, Elektrotechnik oder Maschinenbau).

Tabelle 1

| Zusammensetzung der Formmassen | | | | | | | | | |
|---|---|---|---|---|---|---|---|---|---|
| Beispiel | A | B1 | B2 | B3 | B4 | C1 | C2 | D | E |
| 1* | 60 | -- | -- | -- | -- | 40 | -- | - | - |
| 2* | 50 | -- | -- | -- | -- | 35 | 15 | - | - |
| 3* | 50 | -- | -- | -- | -- | -- | 25 | 20 | 5 |
| 4 | 50 | 35 | -- | -- | -- | 15 | -- | - | - |
| 5 | 50 | -- | 35 | -- | -- | 15 | -- | - | - |
| 6 | 50 | -- | -- | 35 | -- | 15 | -- | - | - |
| 7 | 50 | -- | -- | -- | 35 | 15 | -- | - | - |

* Vergleichsversuche

Tabelle 2

| Prüfergebnisse | | | | | | | | | |
|---|---|---|---|---|---|---|---|---|---|
| Beispiel | Schlagzähigkeit [kJ/m²] | | Kerbschlagzähigkeit [kJ/m²] | | Biege-E-Modul [MPa] | | ZFLNF kJ/m²] | Wasseraufnahme [%] |
| | +20° C | -20° C | +20° C | -20° C | +20° C | +80° C | +20° C | |
| 1* | 63 | 64 | 9 | 8 | 2117 | 750 | 2 | 1,8 |
| 2* | 74 | 59 | 9 | 8 | 1993 | 660 | 2 | 2,1 |
| 3* | n.g. | n.g. | 23 | 19 | 2030 | - | 6 | 1,5 |
| 4 | n.g. | 9xn.g. | 32 | 25 | 1440 | 570 | 26 | 1,8 |
| 5 | n.g. | 142 | 21 | 14 | 1470 | 610 | n.g. | 1,7 |
| 6 | n.g. | n.g. | 36 | 31 | 1460 | 600 | n.g. | 1,8 |
| 7 | n.g. | 8xn.g. | 33 | 21 | 1760 | 620 | 23 | 1,7 |

n.g. = nicht gefunden
ZFLNF = Zusammenfließnahfestigkeit

**Patentansprüche**

1) Thermoplastische Formmassen enthaltend

A) 35 - 97 Gew.-% eines thermoplastiscfren Polyamids A)

B) 3 - 65 Gew.-% eines Pfropfpolymerisates B) mit Pfropfhüllen B 1) aus

B 1.1) wenigstens einem Monomer aus der Reihe der Styrole, α-Methylstyrole, Acrylnitril, Methacrylnitril, der Vinyl-$C_1$-$C_4$-Carbonsäuren, Ester der (Meth)acrylsäure mit primären oder sekundären $C_1$-$C_{10}$-Alkoholen, wobei Styrole oder α-Methylstyrole in Kombination mit Acrylnitril bevorzugt sind

und

B 1.2) wenigstens einem Ester der (Meth)acrylsäure mit tert. $C_4$-$C_{10}$-Alkoholen in Mengen bis zu 15 Gew.-% in der Pfropfhülle B 1)

gepfropft auf eine teilchenförmige Kautschukgrundlage B 2),

wobei das Pfropfpolymerisat B) hergestellt wurde, indem die Monomeren B 1) in wäßriger Emulsion in Gegenwart einer Emulsion des Kautschuks B 2) bei Temperaturen von 40° C bis 70° C unter Einsatz eines Initiatorsystems aus organischem Hydroperoxid (I) und Ascorbinsäure (II) pfropfpolymerisiert werden, wobei 0,3 bis 1,5 Gew.-Teile (I) und 0,1 bis 1 Gewichtsteil (II), jeweils bezogen auf 100 Gew.-Teile Monomer B 1) eingesetzt werden und das Gewichtsverhältnis (I)/(II) 0,3 bis 15 ist,

und gegebenenfalls zusätzlich

C) 0 - 45 Gew.-%, eines oder mehrere Kautschukpolymerisate als Schlagzähmodifikatoren mit einem Kautschukgehalt ) 55 Gew.-%, wobei der Kautschukanteil der Komponente C) mindestens 10 Gew.-% höher als der Kautschukanteil der Komponente B) liegt,

und gegebenenfalls

D), E) 0 bis 25 Gew.-% eines oder mehrerer Harz(Co)-Polymerisate,

F) übliche Zusatzstoffe zu thermoplastischen Formmassen in üblichen Mengen.

2. Thermoplastische Formmassen nach Anspruch 1, enthaltend

A) unter 70 Gew.-% in der Mischung (aus A + B + C + D + E) Polyamide mit einer relativen Viskosität von 2,0 bis 5,0,

B) + C) in einem Gesamtkautschukgehalt von 10 bis Gew.-%, bevorzugt 12 bis 20 Gew.-%,

wobei die Differenz zu 100 Gew.-% an den Nichtkautschukanteilen der Komponenten B), sowie gegebenenfalls C), D) und E), besteht,

sowie gegebenenfalls

F) übliche Mengen an Zusatzstoffen.

3. Verfahren zur Herstellung von thermoplastischen Formmassen durch thermoplastisches Vermischen in der Polyamidschmelze von

A) 35 - 97 Gew.-% eines thermoplastischen Polyamids A)

B) 3 - 65 Gew.-% eines Pfropfpolymerisates B) mit Pfropfhüllen B 1) aus

B1.1) wenigstens einem Monomer aus der Reihe der Styrole, α-Methylstyrole, Acrylnitril, Methacrylnitril, der Vinyl-$C_1$-$C_4$-Carbonsäuren, Ester der (Meth)acrylsäure mit primären oder sekundären $C_1$-$C_{10}$-Alkoholen,

wobei Styrole oder α-Methylstyrole in Kombination mit Acrylnitril bevorzugt sind
und
B 1.2) wenigstens einem Ester der (Meth)acrylsäure mit tert. $C_4$-$C_{10}$-Alkoholen in Mengen bis zu 15 Gew.-% in der Pfropfhülle B 1)
gepfropft auf eine teilchenförmige Kautschukgrundlage B 2),
und gegebenenfalls zusätzlich
C) 0 - 45 Gew.-%, eines oder mehrere Kautschukpolymerisate als Schlagzähmodifikatoren mit einem Kautschukgehalt ) 55 Gew.-%, wobei der Kautschukanteil der Komponente C) mindestens 10 Gew.-% höher als der Kautschukanteil der Komponente B) liegt,
und gegebenenfalls
D), E) 0 bis 25 Gew.-% eines oder mehrerer Harz-(Co)-Polymerisate,
F) übliche Zusatzstoffe zu thermoplastischen Formmassen in üblichen Mengen,
dadurch gekennzeichnet, das das Pfropfpolymerisat B) hergestellt wurde, indem die Monomeren B 1) in wäßriger Emulsion in Gegenwart einer Emulsion des Kautschuks B 2) bei Temperaturen von 40°C bis 70°C unter Einsatz eines Initiatorsystems aus organischem Hydroperoxid (I) und Ascorbinsäure (II) pfropfpolymerisiert werden, wobei 0,3 bis 1,5 Gew.-Teile (I) und 0,1 bis 1 Gewichtsteil (II), jeweils bezogen auf 100 Gew.-Teile Monomer B 1) eingesetzt werden und das Gewichtsverhältnis (I)/(II) 0,3 bis 15 ist.
4. Verfahren zur Herstellung von thermoplastischen Formmassen nach Anspruch 3 durch thermoplastisches Vermischen in der Polyamidschmelze von
A) unter 70 Gew.-% in der Mischung (aus A + B + C + D + E) Polyamiden mit einer relativen Viskosität von 2,0 bis 5,0,
mit
B) + C) in einem Gesamtkautschukgehalt von 10 bis Gew.-%, bevorzugt 12 bis 20 Gew.-%,
wobei die Differenz zu 100 Gew.-% aus den Nicht-kautschukanteilen der Komponenten B), sowie gegebenenfalls C), D) und E), besteht,
und wobei der Pfropfpolymerisat B) nach dem Verfahren noch Anspruch 3 hergestellt wird,
sowie gegebenenfalls zusätzlich
F übliche Mengen an Zusatzstoffen.